Europäisches Patentamt

European Patent Office

Office européen des brevets

(19)

(11) Publication number: **0 238 156 B1**

(12) **EUROPEAN PATENT SPECIFICATION**

(45) Date of publication of the patent specification:
07.03.90

(51) Int. Cl.⁴: **F02M 55/00**, F16L 19/02

(21) Application number: **87300057.4**

(22) Date of filing: **06.01.87**

(54) **Fuel connection.**

(30) Priority: **14.02.86 US 829159**

(43) Date of publication of application:
**23.09.87 Bulletin 87/39**

(45) Publication of the grant of the patent:
**07.03.90 Bulletin 90/10**

(84) Designated Contracting States:
**DE ES FR GB IT**

(56) References cited:
**EP-A- 0 157 512**
**GB-A- 406 764**
**GB-A- 2 129 081**
**US-A- 2 599 389**
**US-A- 3 847 421**
**US-A- 4 423 892**

(73) Proprietor: **GENERAL MOTORS CORPORATION, General Motors Building 3044 West Grand Boulevard, Detroit Michigan 48202(US)**

(72) Inventor: **Field, Martin John, 843 Palmer Road, Churchville New York 1428(US)**

(74) Representative: **Denton, Michael John et al, Patent Section - Luton Office (F6) Vauxhall Motors Limited P.O. Box 3 Kimpton Road, Luton Bedfordshire LU2 0SY(GB)**

## Description

This invention relates to a fuel connection for connecting a fuel line to a fuel line receiver.

In most automotive engine fuel systems, the fuel line terminates in a flare that is captured between a flared seat in a fuel line receiver and a flared nut that threads into the fuel line receiver. The flared nut forces the flare of the fuel line to engage and seal against the flared seat, thereby securing the fuel connection against loss of fuel.

A possible alternative arrangement is shown in US-A 4 423 892, in which an end of a conduit is retained in a bore in a housing. A bushing retains an O-ring between the housing and the conduit. In this arrangement, it is possible for the longitudinal axis of the conduit to become misaligned from (at an acute angle to) the longitudinal axis of the bore, thereby increasing the risk of a breakdown of the sealing engagement between the conduit and the housing.

An alternative arrangement is disclosed in Figure 6 of EP-A 0 157 512. In this arrangement, the retainer ring is not secured to the fuel line receiver and thus does not retain the O-ring to protect it against damage during servicing. Further, there is no indication that the retainer ring supports the tip of the fuel line to prevent lateral movement, and hence prevent leakage.

Similarly, the retainer ring in GB-A 2 129 081 is not secured to its fitting to retain the O-ring.

It is an object of the present invention to provide a fuel connection which overcomes the disadvantages of the above known arrangements.

A fuel connection in accordance with the present invention is characterised over EP-A 0 157 512 by the features specified in the characterising portion of Claim 1.

This invention provides a fuel connection with an alternative construction for securing against the loss of fuel.

In the fuel connection provided by this invention, a fuel line receiver has a fuel passage terminating in an enlarged region, an O-ring is disposed in the enlarged region and retained by a retainer ring, and the tip or a fuel line is inserted through the retainer ring and the O-ring into the fuel passage. The O-ring sealingly engages both the fuel line and the peripheral wall or the enlarged region to secure against the loss of fuel. This fuel connection does not rely on the torque applied to a fuel line nut to secure the connection against the loss of fuel. In addition, this fuel connection requires less space than the flared fuel line-seat-nut connection described above, and also allows rotation of the fuel line after it is connected to the receiver. Moreover, the O-ring that provides the seal in this fuel connection is located internally and thus protected against damage during manufacture and servicing of the fuel apparatus.

Further, in the arrangement of the present invention, once in position, the tip of the fuel line cannot move transversely relative to the fuel line receiver, thereby preventing misalignment or the longitudinal axes of the fuel line and the fuel passage and substantially reducing the risk of leakage.

This invention is now described, by way of example, with reference to the following description and the accompanying drawings, in which:-

Figure 1 is an enlarged sectional view showing the details of construction of a first embodiment of a fuel connection provided by this invention; and

Figure 2 is an enlarged sectional view showing the details of construction of a second embodiment of a fuel connection provided by this invention.

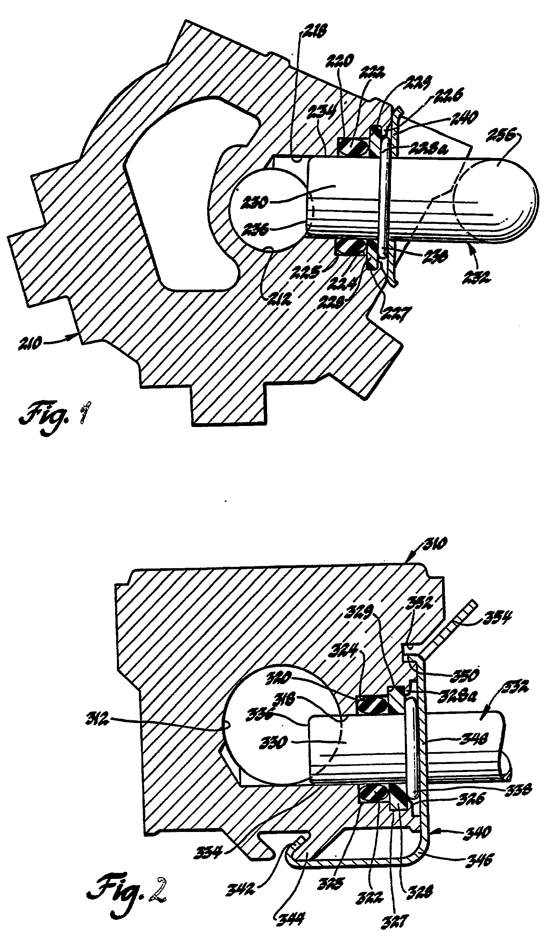

Figure 1 shows, a body 2l0 of a fuel rail in a multi-point fuel injection apparatus for an automotive internal combustion engine (not shown) has an axial fuel passage 2l2 intersected by a transverse fuel passage 2l8 and forms a fuel line receiver.

The transverse fuel passage 2l8 terminates in an enlarged region 220 which is counter-bored. An O-ring 222 is disposed in sealing engagement with a peripheral wall 224 of an inner portion 225 of the enlarged region 220, and a retainer ring 228 is received in an outer portion 227 of the enlarged region 220.

The retainer ring 228 abuts a shoulder 229 between the inner and outer portions 225 and 227 of the enlarged region 220, and a lip 226 on the body 2l0 is staked or deformed over the peripheral portion of an outer surface 228a of the retainer ring 228. The retainer ring 228 is thereby secured in the outer portion 227 of the enlarged region 220 to retain and protect the O-ring 222.

A tip 230 of a tubular fuel line 232 is inserted through the retainer ring 228 and the O-ring 222 into the transverse fuel passage 2l8 and is supported by the transverse fuel passage 2l8 and by the retainer ring 228. The tip 230 has a cylindrical sealing surface 234 that is engaged by the O-ring 222 to secure against loss of fuel from the connection between the fuel line 232 and the body 2l0. An end 236 of the tip 230 is curled inwardly as shown to ensure that no sharp edges will contact the O-ring 222 as the tip is inserted through the O-ring.

A flange 238 on the fuel line 232 is received in the outer portion 227 of the enlarged region 220 outwardly of the retainer ring 228. The flange 238 engages a clip 240 secured to the body 2l0 to hold the fuel line 232 in place.

Referring now to Figure 2, a body 3l0 of a fuel rail in a multi-point fuel injection apparatus for an automotive internal combustion engine (not shown) has an axial fuel passage 3l2 intersected by a transverse fuel passage 3l8 and forms a fuel line receiver.

The transverse fuel passage 3l8 terminates in an enlarged region 320 which is counter-bored. An O-ring 322 is disposed in sealing engagement with a peripheral wall 324 of an inner portion 325 of the enlarged region 320, and a retainer ring 328 is received in an outer portion 327 of the enlarged region 320.

The retainer ring 328 abuts a shoulder 329 between the inner and outer portions 325 and 327 of the enlarged region 320, and a lip 326 on the body 3l0 is staked or deformed over the peripheral portion of the outer surface 328a of the retainer ring 328. The retainer ring 328 is thereby secured in the outer portion 327 of the enlarged region 320 to retain and protect the O-ring 322.

A tip 330 of a tubular fuel line 332 is inserted through retainer ring 328 and the O-ring 322 into the transverse fuel passage 3l8 and is supported by the transverse fuel passage 3l8 and by the retainer ring 328. The tip 330 has a cylindrical sealing surface 334 that is engaged by the O-ring 322 to secure against loss of fuel from the connection between the fuel line 332 and the body 3l0. An end 336 of the tip 330 is curled inwardly as shown to ensure that no sharp edges will contact the O-ring 322 as the tip is inserted through the O-ring.

A flange 338 on the fuel line 332 is received in the outer portion 327 of the enlarged region 320 outwardly of the retainer ring 328. The flange 338 engages a spring clip 340.

The spring clip 340 has a hook 342 secured over a projection 344 on the body 3l0. A bend 346 in the spring clip 340 forms an acute angle when the spring clip is not installed on the body 3l0, but when installed on the body 3l0, the bend 346 is stretched to approximately a right angle. The spring clip 340 has a pair of arms 348 embracing the fuel line 332 and engaging the flange 338, and each arm includes a tang 350 received in a notch 352 formed in the body 3l0. The tangs 350 and the hook 342 secure the spring clip 340 to the body 3l0, and the spring clip 340 thereby holds the fuel line 332 in place. A finger 354 may be provided on each arm 348 to allow disengagement of the spring clip 340 from the body 3l0.

It will be noted that, in each embodiment, the fuel line may be rotated after it is inserted and secured in the fuel line receiver. Accordingly, the fuel line may be assembled with the body of the fuel rail before the body is installed on the engine, and the fuel line may then be rotated to properly align its other end.

It also will be noted that this fuel line connection allows the fuel line to have a bend, such as 256 in Figure 1, very close to the body if such should be required by the particular application.

## Claims

1. A fuel connection comprising a fuel line receiver having a fuel passage (218, 318) and an enlarged region (220, 320) at one end of the fuel passage, the enlarged region having a peripheral wall (224, 324); a fuel line (232, 332) having a tip (230, 330) received in the fuel passage, a flange (238, 338), and a sealing surface (234, 334) disposed in the enlarged region between the flange and an end (236, 336) of the tip; an O-ring (222, 322) sealingly engaging the peripheral wall and the sealing surface; securing means (240, 340) secured to the fuel line receiver and engaging the flange for holding the fuel line in position; and a retainer ring (228, 328) surrounding the fuel line between the O-ring and the flange; characterised in that the flange (238, 338) is received in the enlarged region (220, 320); in that the peripheral wall (224, 324) has an annular groove (227, 327) between the O-ring (222, 322) and the flange (238, 338); in that the peripheral wall has a lip (226, 326) staked over to form the annular groove, the retaining ring (228, 328) being retained in the annular groove to secure the retaining ring to the fuel line receiver to retain the O-ring in the enlarged region (220, 320); and in that the tip (230, 330) of the fuel line (232, 332) is supported against lateral movement by the fuel passage (218, 318) and the retainer ring.

2. A fuel connection as claimed in Claim 1, characterised in that the fuel line (232, 332) is tubular and the end (236, 336) of the tip (230, 330) is curled inwardly to facilitate insertion through the O-ring (222, 322).

3. A fuel connection as claimed in Claim 1 or Claim 2, characterised in that the retainer ring (228, 328) is formed or a material that compresses as the retainer ring is inserted into the enlarged region (220, 320) and then expands into the annular groove (227, 327).

4. A method of assembling a fuel connection comprising a fuel line receiver having a fuel passage (228, 328) and an enlarged region (220, 320) at one end of the fuel passage and further comprising a fuel line (232, 332) having a tip (230, 330), the method comprising the steps of:
inserting an O-ring (222, 322) in the enlarged region in sealing engagement with a peripheral wall (224, 324) of the enlarged region; thereafter inserting and securing a retainer ring (228, 328) in the enlarged region to retain the O-ring in the enlarged region; and thereafter inserting the tip of the fuel line through the retainer ring and the O-ring into the fuel passage while causing the O-ring to sealingly engage a cylindrical sealing surface (234, 334) of the tip, and the fuel passage and the retainer ring to support the tip; characterised by staking over a lip (226, 326) in the peripheral wall (224, 324) to form an annular groove (227, 327) in which the retainer ring (228, 328); is secured.

## Patentansprüche

1. Kraftstoffverbindung mit einer Kraftstoffleitungs-Aufnahme mit einem Kraftstoffdurchlaß (218, 318) und einem vergrößerten Bereich (220, 320) an einem Ende des Kraftstoffdurchlasses, wobei der vergrößerte Bereich eine Umfangswand (224, 324) besitzt; einer Kraftstoffleitung (232, 332) mit einer in dem Kraftstoffdurchlaß (230, 330) aufgenommenen Spitze, einem Flansch (238, 338) und einer in dem vergrößerte Bereich zwischen dem Flansch und einem Ende (236, 336) der Spitze angeordneten Dichtfläche (234, 334); einem dicht an der Umfangswand und der Dichtfläche anliegenden O-Ring (222, 322); an der Kraftstoffleitungs-Aufnahme befestigtem Sicherungsmittel (240, 340), das an dem Flansch angreift, um die Kraftstoffleitung in ihrer Lage zu halten; und einem Rückhaltering (228, 328), der die Kraftstoffleitung zwischen dem O-Ring und dem Flansch umgibt; dadurch gekennzeichnet, daß der Flansch (238, 338) in dem vergrößerten Bereich (220, 320) aufgenommen ist; daß die Umfangswand (224, 324) eine Ringnut (227, 327) zwischen dem O-Ring (222, 322) und dem Flansch (238, 338) besitzt; daß die Umfangswand eine zur Bildung der Ringnut verstemmte Lippe (226, 326) besitzt, wobei der Haltering (228, 328) in der Ringnut zurückgehalten ist, um den Haltering an der Kraftstoffleitungs-Aufnahme zu befestigen und den O-Ring in dem vergrößerten Bereich (220, 320) zurückzuhalten; und daß die Spitze (230, 330) der Kraftstoffleitung (232, 332) gegen seitliche Bewegung durch den Kraftstoffdurchlaß (218, 318) und den Haltering abgestützt ist.

2. Kraftstoffverbindung nach Anspruch 1, dadurch gekennzeichnet, daß die Kraftstoffleitung (232, 332) rohrförmig ist und das Ende (236, 336) der Spitze (230, 330) eingerollt ist, um das Einsetzen durch den O-Ring (222, 322) zu erleichtern.

3. Kraftstoffverbindung nach Anspruch 1 oder 2, dadurch gekennzeichnet, daß der Haltering (228, 328) aus einem Material gebildet ist, das sich beim Einsetzen des Halteringes in den vergrößerten Bereich (220, 320) komprimiert, und dann in die Ringnut (227, 327) hinein expandiert.

4. Verfahren zum Zusammenbauen einer Treibstoffverbindung mit einer Treibstoffleitungs-Aufnahme mit einem Treibstoffdurchlaß (228, 328) und einem vergrößerten Bereich (220, 320) an einem Ende des Treibstoffdurchlasses und weiter mit einer Kraftstoffleitung (232, 332) mit einer Spitze (230, 330), mit den Schritten:
es wird ein O-Ring (232, 322) in den vergrößerten Bereich in Dichtanlage mit einer Umfangswand (224, 324) des vergrößerten Bereiches eingesetzt; danach wird ein Haltering (228, 328) in den vergrößerten Bereich zum Rückhalten des O-Ringes in dem vergrößerten Bereich eingesetzt und befestigt; und danach die Spitze der Kraftstoffleitung durch den Haltering und den O-Ring in den Treibstoffdurchlaß eingesetzt, während der O-Ring in Dichteingriff mit einer zylindrischen Dichtfläche (234, 334) der Spitze, dem Treibstoffdurchlaß und dem Haltering zum Abstützen der spitze gebracht wird, dadurch gekennzeichnet, daß eine Lippe (226, 326) in der Umfangswand (224, 324) übergestemmt wird, um eine Ringnut (227, 327) auszubilden, in der der Haltering (228, 328) befestigt wird.

## Revendications

1. Raccord de combustible comprenant un récepteur de conduit de combustible ayant un passage (218, 318) pour le combustible et une partie agrandie (220, 320) à une extrémité du passage pour le combustible, la partie agrandie ayant une paroi périphérique (224, 324); un conduit de combustible (232, 332) ayant une partie d'extrémité (233, 230) reçue dans le passage pour le combustible, une collerette (238, 338), et une surface d'étanchéité (234, 334) située dans la partie agrandie entre la collerette et une extrémité (236, 336) de la partie d'extrémité; une bague torique (222, 322) en contact d'étanchéité avec la paroi périphérique et la surface d'étanchéité; des moyens de fixation (240, 340) fixés sur le récepteur de conduit de combustible et en contact avec la collerette pour maintenir le conduit de combustible en position; et une bague de retenue (228, 328) entourant le conduit de combustible entre la bague torique et la collerette; caractérisé en ce que la collerette (238, 338) est reçue dans la partie agrandie (220, 320); en ce que la paroi périphérique (224, 324) présente une gorge annulaire (227, 327) entre la bague torique (222, 322) et la collerette (238, 338); en ce que la paroi périphérique présente une lèvre (226, 326) repliée par-dessus pour former la gorge annulaire, la bague de retenue (228, 328) étant retenue dans la gorge annulaire pour fixer la bague de retenue sur le récepteur de conduit de combustible afin de retenir la bague torique dans la partie agrandie (220, 320); et en ce que la partie d'extrémité (230, 330) du conduit de combustible (232, 332) est soutenue contre tout déplacement latéral par le passage (218, 318) pour le combustible et la bague de retenue.

2. Raccord de combustible suivant la revendication 1, caractérisé en ce que le conduit de combustible (232, 332) est tubulaire et l'extrémité (236, 336) de la partie d'extrémité (230, 330) est roulée vers l'intérieur pour faciliter l'insertion à travers la bague torique (222, 322).

3. Raccord de combustible suivant la revendication 1 ou 2, caractérisé en ce que la bague de retenue (228, 328) est formée d'un matériau qui se comprime lorsque la bague de retenue est insérée dans la partie agrandie (220, 320) et se dilate ensuite dans la gorge annulaire (227, 327).

4. Procédé pour assembler un raccord de combustible constitué par un récepteur de conduit de combustible ayant un passage de combustible (228, 328) et une partie agrandie (220, 320) à une extrémité du passage pour le combustible et comprenant en outre un conduit de combustible (232, 332) ayant une partie d'extrémité (230, 330), ce procédé comprenant les phases consistant à: insérer une bague torique (222, 322) dans la partie agrandie, en contact d'étanchéité avec une paroi périphérique (224, 324) de la partie agrandie; à insérer ensuite et fixer une bague de retenue (228, 328) dans la partie agrandie afin de retenir la bague torique dans la partie agrandie; et à insérer ensuite la partie d'extrémité du conduit de combustible à travers la bague de retenue et la bague torique dans le passage pour le combustible tout en forçant la bague torique à venir en contact d'étanchéité avec une surface d'étanchéité cylindrique (234, 334) de la partie d'extrémité, et le passage pour le combustible et la bague de retenue pour soutenir la partie d'extrémité, procédé caractérisé en ce qu'on déforme une lèvre (226, 326) dans la paroi périphérique (224, 324) pour former une gorge annulaire (227, 327) dans laquelle est fixée la bague de retenue (228, 328).

Fig. 1

Fig. 2